Europäisches Patentamt

European Patent Office

Office européen des brevets

(11) Veröffentlichungsnummer: **0 093 445**

**A1**

## (12) EUROPÄISCHE PATENTANMELDUNG

(21) Anmeldenummer: 83104268.4

(22) Anmeldetag: 02.05.83

(51) Int. Cl.³: **A 01 K 27/00**

(30) Priorität: 05.05.82 DE 3216767

(43) Veröffentlichungstag der Anmeldung:
09.11.83 Patentblatt 83/45

(84) Benannte Vertragsstaaten:
AT BE CH DE FR LI NL SE

(71) Anmelder: H. von Gimborn GmbH
s'Heerenberger Strasse 2-4 Postfach 1320
D-4240 Emmerich(DE)

(72) Erfinder: Haverkamp, Helmut
Hohlbachweg 2
D-4224 Hünxe(DE)

(74) Vertreter: Pretzell, Hellmut, Dipl.-Ing.
Pelikan AG Podbielskistrasse 141 Postfach 103
D-3000 Hannover 1(DE)

(54) **Traggehäuse für Tiergurtleinen.**

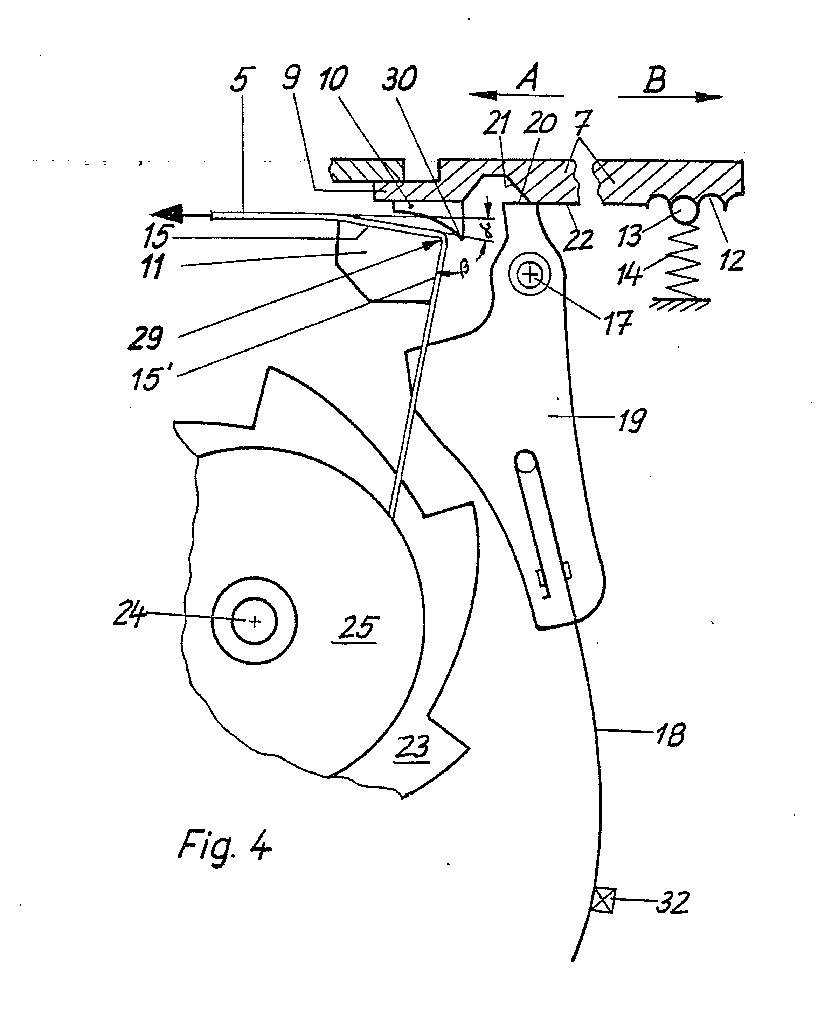

(57) Die Anmeldung beschreibt ein Traggehäuse für Tiergurtleinen, insbesondere Hundegurtleinen, mit angeformtem Handgriff, einer mit einem gezahnten Klinkenrad verbundenen Spiralfedertrommelspule für den Gurtwickel, von welcher das Gurtband beim Ausziehen und Spannen der Spiralfeder abwickelbar, und in beliebiger Auszugslänge feststellbar und bei seiner Freigabe durch die Spiralfeder wieder selbsttätig aufwickelbar ist. Im Gegensatz zu bekannten Einrichtungen dieser Gattung, die auch zum Führen kräftigerer Tiere geeignet sind und bei denen ein Sebstfestzurren eines Klemm-Mechanismus je nach Zugstärke des Tieres das Lösen des Betätigungsschiebers erschwert und die Dauerhaltbarkeit des Gurtbandes vermindert, ist ein einziger Einstellschieber (7) vorgesehen, der einen leicht gängigen Programmschalter für verschiedene Betriebsarten darstellt, die sich in der Praxis ergeben; denn bei der Einstellung des Schiebers (7) ist nur ein geringer Rastwiderstand der Rasten (12, 13) der Einstellstufen zu überwinden, deren Anzahl leicht den jeweiligen praktischen Erfordernissen angepaßt werden kann. Eine solche ergänzende Variante ist eine automatische Gurtauszugsbegrenzung auf eine vorbestimmte Länge, die ebenfalls mit dem Einstellschieber (7) aufgehoben werden kann (Fig. 3).

Fig.3

Patentassessor Dipl.-Ing.
Hellmut Pretzell im Hause
Pelikan Aktiengesellschaft
Hannover

**0093445**

05.04.1983

82/23

## Traggehäuse für Tiergurtleinen

Die Erfindung betrifft ein Traggehäuse für Tiergurtleinen, insbesondere Hundegurtleinen, mit angeformtem Handgriff, einer mit einem gezahnten Klinkenrad verbundenen Spiralfedertrommelspule für den Gurtwickel, von welcher das Gurtband beim Ausziehen und Spannen der Spiralfeder abwickelbar, in beliebiger Auszugslänge mittels eines Handstellers feststellbar und bei seiner Freigabe durch die Spiralfeder wieder selbsttätig aufwickelbar ist.

Bei den herkömmlichen Hundeleinengehäusen dieser Kategorie ist entweder eine dauernd in beiden Richtungen wirksame federbelastete Bandbremse oder -zange vorhanden, die zur Freigabe des Bandablaufs durch Fingerdruck entgegen Federwirkung gelöst werden muß, ebenso auch, wenn das lose Band selbsttätig aufgespult werden soll (vergleiche DE-GM 72 35 308). Es ist daher schon vorgeschlagen worden, für die Aufwickelstellung zur Entlastung des Benutzers eine Raste vorzusehen (DE-OS 30 40 281), welche den Einstellgriff in der Bandablaufstellung festhält. In beiden Fällen war es nicht möglich, ohne fortgesetzte Betätigung der Riegeltaste oder des Riegelschiebers eine Betriebsart

+41569

- 2 -

wie z. B. Abwickelstop/Aufwickelfreilauf durchzuführen, wie sie zum Heranholen des Tieres benötigt wird. Derartige Leinen-Aufwickelvorrichtungen eignen sich, wenn das leichte Lösen der Klemmeinrichtung erhalten bleiben soll, praktisch nur zum Führen kleinerer Tiere, wie z. B. Katzen und Hunde. Bei größeren Tieren, d. h. zugstarken Hunden, zurrt sich die Klemmeinrichtung trotz der flächenartigen Pressung zwischen dem keilförmigen Klemmschieber und der Klemmfläche durch den Metallsteg auch relativ fest, so daß der Klemmschieber nur schwer gelöst werden kann.

Die fortgesetzte Betätigung der Schieber bzw. der zugehörigen Riegeltaste gilt auch für Anordnungen, bei denen der Bandablauf normalerweise in beiden Richtungen frei ist und eine in beiden Richtungen wirksame Bremse oder Bremstaste vorgesehen ist, die in ihrer wirksamen Stellung noch zusätzlich verriegelbar sein kann.

Der Erfindung liegt die Aufgabe zugrunde, die an der Gurtleine wirkenden Zugkräfte so in das Traggehäuse einzuleiten, daß der mit allen notwendigen und üblichen Programmen versehene Handsteller nur unwesentlich unter dem Einfluß der Brems- und Haltekräfte steht und daher leicht zu betätigen ist und daß auch ein Sperrgetriebe nur unwesentlich von den Hauptzugkräften an der Gurtleine beaufschlagt wird und somit klein und leicht ausgelegt werden kann. Dabei sollen die Möglichkeiten einer automatischen Auszugsbegrenzung und deren Abschaltung sowie das automatische Heranziehen des Hundes nur mit dem Traggriff ohne Betätigung des Handstellers als weitere neue Programmstufen einbezogen werden.

Zur Lösung dieser Aufgabe ist im Traggehäuse ein Umlenkelement mit nahezu rechtwinkling zueinander angeordneten Gurtanlagefläche befestigt, welches über das Gurtband mit mindestens einem Zusatzhalteelement in Wirkverbindung

+41569

- 3 -

bringbar ist. Mit Hilfe des im Traggehäuse feststehenden Umlenkelements werden die wesentlichen Zugkräfte, die am Gurtband wirken ohne große Beaufschlagung von Zusatzhalteelementen wie z. B. zur Selbsthemmung neigenden Klemmvorrichtungen abgeleitet. Durch einzelne einfache Zusatzhalteelemente zum Umlenkelement wird es möglich, in einem Handsteller unterschiedliche Programme zum Führen eines starken und zugkräftigen Tieres anzuordnen. Das Umlenkelement übernimmt somit die Aufgabe, die Zugkräfte am Gurtband so weit wie möglich aufzufangen, und die Zusatzhalteelemente übernehmen den übrigbleibenden Rest der Haltekräfte haben jedoch im wesentlichen regelnde Funktionen.

In einer vorteilhaften Ausbildungsform der Erfindung sind die Gurtanlageflächen derart angeordnet, daß ihr Winkel ( + B) zur Zugrichtung des Gurtbandes zwischen 70o und 120o beträgt, daß der Winkel der ersten Gurtanlagefläche minimal 5o und maximal 30o beträgt, wobei an der Schnittlinie beider Gurtanlageflächen das Umlenkelement eine scharfe Umlenkkante aufweist. Durch eine derartige Anordnung der Gurtanlageflächen am Umlenkelement wird das Gurtband nicht mehr tangential aus der Trommelspule in Zugrichtung des Tieres herausgeführt, sondern über eine relativ scharfe Umlenkkante um nahezu 90o abgeknickt gehalten und geführt. Bei einem flexiblen Nylon-Gurtband, das in Richtung der Kettfäden leichter umbiegbar ist als in Richtung seiner Schußfäden ergibt sich somit an der Umlenkkante keine wesentliche Abnutzung des Gurtbandes, dafür aber eine gute Aufnahmebereitschaft zum Auffangen kurzer und starker Zugkräfte im Umlenkelement.

Eine Handhabungserleichterung des Traggehäuses wird dadurch erreicht, daß der Händsteller als Schieber mit Betätigungs- griff im Fingergriffbereich des Gehäusehandgriffs ausgebildet ist, wobei durch dessen vorderes Ende mit dem da-

+41569                                                    - 4 -

runter angeordneten Umlenkelement ein durch Bewegen des Schiebers und damit der Zusatzelemente Greifklaue und Kanalsteg in der Stärke veränderbarer Gurtkanal ausbildbar ist. Mit dem Daumen der rechten Hand kann so während des Haltens des Traggehäuses der Schieber in unterschiedliche Stellpositionen geschoben werden und somit unterschiedliche Gurtkanalhöhen einstellen.

Zum Anpassen der Führung des Hundes an die jeweilige Umgebungssituation in der sich der Hundeführer und der Hund befinden, ist das Zusatzhalteelement in Form der Greifklaue am Kanalsteg mittels des Schiebers auf eine Stirnseite eines Absatzes am Gurtband positionierbar. Dadurch wird es möglich, einen Freilauf des Gurtbandes nur bis zu einer bestimmten Gurtbandlänge ohne Betätigung des Schiebers zu ermöglichen. Wenn diese bestimmte Gurtbandlänge erreicht ist, stößt ein auf das Gurtband aufgenähtes Gewebeteil oder eine Metallöse an der Halteklaue an und stoppt somit den Freilauf des Hundes vorzeitig vor dem Auslauf der Gesamtgurtbandlänge. Dabei bleibt der Schieber leicht positionierbar, da die Zugspannung des abgewinkelten Gurtbandes auf dem Halteelement liegt und nicht auf dem Schieber. Das Gurtband ist also zwischen der Umlenkkante und der Greifklaue frei beweglich, wird jedoch durch eine Verdickung auf dem Gurtband beim Auszug bis zu einer bestimmten Länge der Leine von dem Absatz mit senkrechter Kraftrichtung zur Schieberbetätigungsrichtung am Vorbeilaufen an der Umlenkkante gehindert. Der Kraftvektor des Zugbandes bzw. des Absatzes am Zugband vor der Umlenkkante steht also in vorteilhafter Weise rechtwinklig zum Zugvektor des Gurtbandes und damit zur Arbeitsrichtung des Schiebers, so daß die Einstellmöglichkeit des Schiebers erhalten bleibt.

+41569

In einer weiteren vorteilhaften Ausbildung der Erfindung
ist das Gurtband in an sich bekannter Weise zwischen
die erste Gurtanlagefläche und das Zusatzhalteelement
in Form der Greifklaue, die am Kanalsteg angeordnet ist,
klemmbar. Dadurch kann der Dauerstop des Gurtbandes in
beiden Richtungen mit dem gleichen Schieber eingestellt
werden, ohne daß sich eine starke Selbsthemmung bei Erhöhung der Zugkraft des Tieres einstellt. Über die Umlenkkante und die Führung des Gurtbandes um das Umlenkelement
wird auch in dieser Stellung eine leichte Betätigung
des Schiebers aus der Dauerstopstellung heraus in die
Lösestellungen ermöglicht.

Damit das Tier im Gefahrenfalle ohne wechselweise Betätigung des Schiebers schnell an den Tierführer herangezogen werden kann, ist das Gurtband durch mehrere Zusatzelemente in Form einer um einen Drehpunkt schwenkbaren Sperrklinke, die zwischen dem Schieber und einem
Klinkenrad angeordnet ist, und die gegen die Spannung
ihrer Sperrfeder mittels Führungsflächen am Schieber
und mittels einer Klinkenanlagefläche an der Sperrklinke aushebbar ist, sowie in Form des Klinkenrades und
in Form einer Spiralfedertrommel automatisch nur in der
Auslaufrichtung festhaltbar. Dadurch kann der Benutzer
unter Schreckeinwirkung das Tier im Gefahrenfalle schnell
zu sich heranziehen und durch anschließendes Lockern
der Leine über die Kraft der Spiralfeder das Gurtband
nach und nach durch Wiederholung dieses Vorgangs automatisch einziehen.

In einer weiteren vorteilhaften Ausbildung der Erfindung
sind die vorgenannten drei Ausbildungsformen derart zusammengefaßt, daß Einstellstufen des Schiebers Rasten
zugeordnet sind, und daß die Zuordnung der Führungsflächen des Schiebers, der Sperrklinke und ihrer Klinkenanlagefläche sowie der Gurtkanalhöhen zwischen der Greifklaue und der Umlenkkante zu den einzelnen Stufen in
der Weise bestimmt ist, daß bei Stufe I die Kanalhöhe
die Gurtstärke wesentlich übersteigt (Vollfreilauf) und
Stufe II die Kanalhöhe derart vermindert ist, daß durch
einen Absatz auf dem Gurt dieser arretierbar ist (Vorlaufsperre auf halber Gurtlänge/Rücklauf frei) und Stufe III
die Vollsperre durch den verengten Gurtkanal und die
scharfe Umlenkkante in beiden Richtungen einstellbar
ist, und Stufe IV das Umlenkelement mit den Gurtanlageflächen und die Sperrklinke wirksam ist und die Kanalhöhe die Gurtstärke wesentlich übersteigt (Vorlaufsperre,
Rücklauf frei). Dadurch können die unterschiedlichsten
Programme zum Führen des Hundes von einem einzigen Schieber
schnell und einfach mit einem Finger der Führungs- und
Haltehand des Tierführers eingestellt bzw. voreingestellt
werden.

In weiterer Ausbildung der Erfindung kann im Schieber
ein Fenster zum Ablesen von Ziffern oder Farbmarkierungen
für die einzelnen Stufen auf der Gehäuseoberfläche vorgesehen sein und schließlich kann der hohle Gehäusehandgriff
mit einer Öffnung versehen sein, durch die ein einschiebbares Handschlaufenband mit einem Verstärkungsknebel
im Gehäusehandgriff vorgesehen sein kann. Dadurch kann
der Hundeführer die jeweilige Position des Sperrschiebers
mit einem Blick übersehen, und er kann sich mit dem Handschlaufenband gegen ein ruckartiges unerwartetes Ziehen
des Hundes gegen das Verlieren des Traggehäuses schützen.

In den Zeichnungen ist ein Ausführungsbeispiel der Erfindung
dargestellt. Es zeigen

Fig. 1 eine Seitenansicht des Traggehäuses,

Fig. 2 den dazugehörigen Grundriß,

+41569

Fig. 3 eine Seitenansicht des Traggehäuses bei abgenommenem Gehäusedeckel,

Fig. 4 eine vergrößerte Teildarstellung der wesentlichen Getriebeteile in der Grundstellung (Stufe I),

Fig. 5 die gleiche Darstellung wie in Fig. 4, jedoch mit dem Schieber in der Stellung "Freilauf bis auf 2 m Leinenlänge" (Stufe II),

Fig. 6 die gleiche Darstellung wie in Fig. 4 und 5, jedoch mit dem Schieber in der äußersten linken Stellung "Dauerstop" (Stufe III), und

Fig. 7 die gleiche Darstellung wie in den Fig. 4 bis 6, jedoch mit dem Schieber in der äußersten rechten Stellung bei freigegebener Sperrklinke "nach und nach Heranziehen des Hundes" Stufe IV.

Die Erfindung wird anhand der Zeichnungen an dem Geräteaufbau und darauffolgend an dessen Funktionen erläutert.

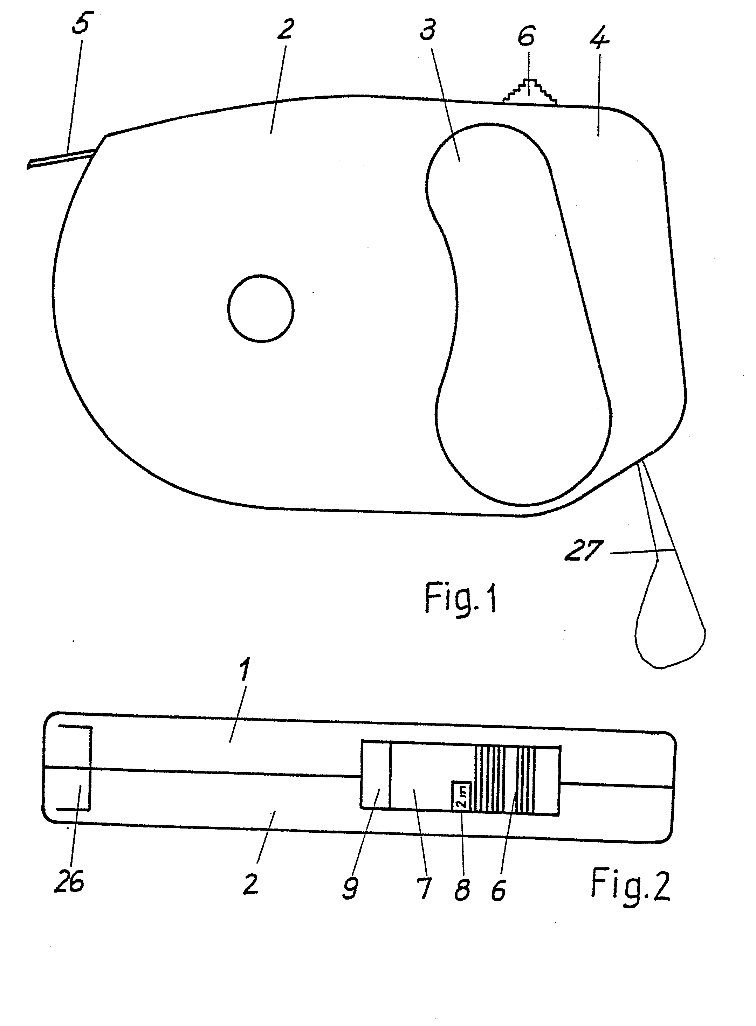

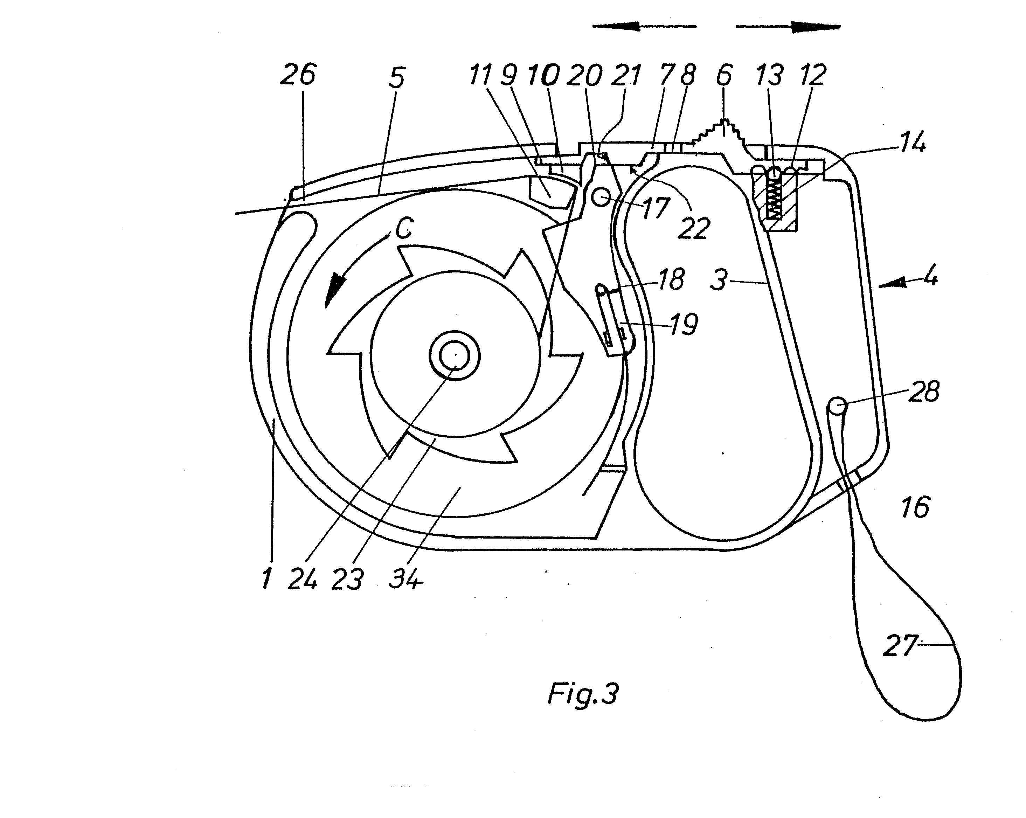

In Fig. 1 ist das Traggehäuse, bestehend aus zwei Hälften, nämlich der Gehäuseschale 1, welche das gesamte Triebwerk aufnimmt und dem Gehäusedeckel 2, die beide miteinander verschraubt werden, dargestellt. Durch den gemeinsamen Durchbruch 3 wird ein hohler Gehäusehandgriff 4 gebildet. Das im Traggehäuse aufgerollte Gurtband 5 tritt durch ein Mundstück 26 (Fig. 2) aus dem Traggehäuse heraus. Zwischen den Traggehäusehälften ist die Schieberplatte 9 gleitend geführt, die den Einstellschieber 7 und den Stellgriff 6 trägt. In Schieber 7 befindet sich ein Fenster 8 für auf der Traggehäuseoberfläche angebrachte Ziffern oder Farbmarkierungen zur Anzeige der jeweiligen Griffstellung. Im Beispiel ist dies die Angabe "2 m", welche auf die eingestellte maximale Auszugslänge von 2 m hinweist. Auf der Unterseite sind am linken Ende unter der Schieberplatte 9 (Fig. 3) der Kanalsteg 10 als Oberteil zum feststehenden darunter befindlichen Umlenkelement 11 mit der Gurtanlagefläche 15 (Fig. 4) angebracht, sowie die Aufgleitflächen 21, 22 zur Steuerung der Sperrklinke 19 über die Klinkenanlagefläche 20. Auf dem festen Trommelzapfen 24 in der Gehäuseschale 1 ist die Trommelspule 34 mit dem Klinkenrad 23 drehbar gelagert, in welcher die Spiralfedertrommel 25 mit der Spiralfeder (nicht dargestellt) liegt, deren inneres Ende mit dem Trommelfestzapfen 24 und deren äußeres Ende mit dem Gurtband 5 verbunden ist bzw. mit der gesonderten Spiralfedertrommel 25, an der seinerseits das innere Ende des Gurtbandes 5 befestigt ist.

Die Sperrklinke 19 ist um den im Traggehäuse angeordneten Festzapfen 17 schwenkbar. Auf der Sperrklinke 19 sitzt eine Sperrfeder 18. Die Enden der Sperrfeder 18 liegen am Federanschlag 32 bzw. an der Klinke 19 an, so daß die Klinke 19 im Uhrzeigersinn gespannt wird.

In den Fig. 3 bis 6 liegt die Klinkenanlagefläche 20 an der Schieberplatte 9 an der Führungsfläche 22 an, so daß die Klinke 19 gegen die Kraft ihrer Sperrfeder 18 in ausgehobener Lage gehalten wird. In dieser vergrößerten Teildarstellung von Fig. 3 ist mit 10 ein Kanalsteg an der Schieberplatte 9, die sich am vorderen Ende des Schiebers 7 befindet, dargestellt. Unter dem Kanalsteg 10 etwa senkrecht über der Spiralfedertrommel 25 und dem Klinkenrad 23 ist ein Umlenkelement 11 für das Gurtband 5 angeordnet. Das Umlenkelement 11 weist gegenüber der Gurtbandzugrichtung um den Winkel    geneigt eine erste Gurtanlagefläche 15 auf, an die sich etwa senkrecht dazu eine zweite Gurtanlagefläche 15´ unter dem Winkel B anschließt. Die Neigung dieser Gurtanlageflächen 15,15´ gegenüber der Gurtbandzugrichtung ist so gewählt, daß die wesentlichen

+41569                                                    - 9 -

**0093445**

Zugkräfte des Tieres von der Umlenkkante 29 über das
Umlenkelement 11 in das Traggehäuse eingeleitet werden.
In Fig. 4 ist die Grundstellung (Stufe I) des Schiebers
7 am Traggehäuse dargestellt. Der Schieber 7 weist an
seinem rechtsseitigen Ende in einer weiteren geführten
Schieberplatte Rastöffnungen 12 auf, in die eine Rastkugel
über einer Rastfeder 14 einschnappen kann. Mit Hilfe dieser
Rastöffnungen 12 können verschiedene Einstellpositionen
des Schiebers 7 genau zentriert wiederholbar ausgeführt
werden.

In der dargestellten Position bildet die Greifklaue 30
und die Umlenkkante 29 einen so breiten Gurtkanal, daß
das Gurtband 5 durch den Zug des Hundes beliebig ausgerollt und durch den Zug der Spiralfeder (nicht dargestellt)
wieder automatisch eingerollt werden kann.

Im Beispiel sind 4 Schieberstellungen vorgesehen, welche
durch die 4 Rastöffnungen 12 für die Rastkugel 13 und
Rastfeder 14 fixierbar sind. Die Anordnung und Gestaltung
des Kanalstegs 10 und der Aufgleitfläche 21 auf den Schieber 7 und relativ zum Umlenkelement 11 bzw. zur Klinkenanlagefläche 20 ist so gewählt, daß in der normalen Ruhestellung des Schiebers der Gurtkanal 30,29 geöffnet und
die Sperrklinke 19 ausgehoben ist, wodurch sich ein vollkommen freier Vor- und Rücklauf des Gurtbandes ergibt.
Durch das Verstellen des Schiebers 7 wird gleichzeitig
der zwischen dem Kanalsteg 10 bzw. der Greifklaue 30
und dem Umlenkelement 11 bzw. der Umlenkkante 29 gebildete
Gurtbandkanal erweitert oder bis zum Festklemmen des
Gurtbandes 5 verengt.

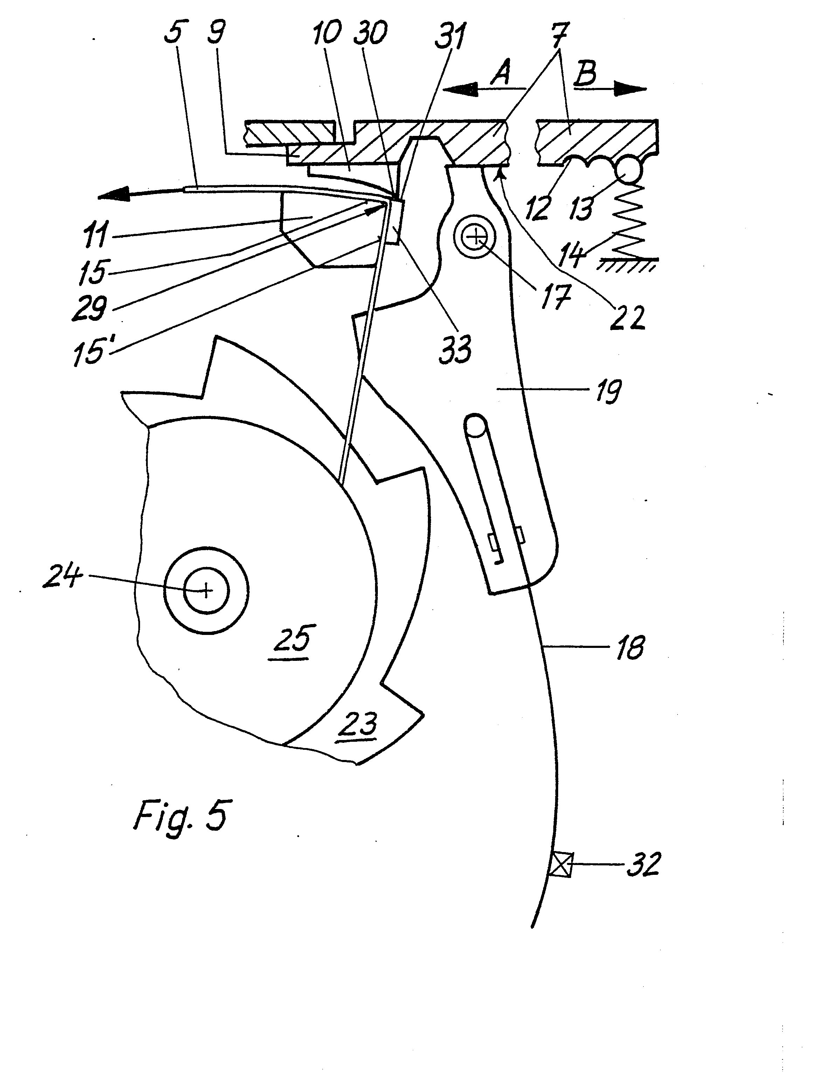

In Fig. 5 ist eine solche Verengung des Gurtbandkanals
durch Betätigung des Schiebers 7 in Richtung A um eine
Rastöffnugn 12 dargestellt. Die Sperrklinke 19 bleibt
über ihre Klinkenanlagefläche 20 und die Führungsfläche 22

+41569

des Schiebers 7 weiterhin gegen die Kraft ihrer Sperrfeder 18 im ausgehobenen Zustand. Die Greifklaue 30 auf
dem Kanalsteg 10 wird dagegen so in der Nähe der Umlenkkante 29 positioniert, daß ein Absatz 33 mit seiner Stirnseite 31 dort zum Anschlag kommt. Durch den auf dem Gurtband angebrachten Absatz 33 wird ein Durchgang durch den
normalen Gurtkanal zwischen der Greifklaue 30 und der
Umlenkkante 29 verhindert. Damit wird erreicht, daß der
Bandablauf grundsätzlich bei einer bestimmten oder bei
mehreren bestimmten und vorher festgelegten Auslauflängen
des Gurtbandes gestoppt wird. Dabei stößt der Absatz 33
beim Ablauf des Gurtbandes 5 gegen die Greifklaue 30 mit
seiner Stirnseite 31 an. Die vom Gurtband 5 über den
Absatz 33 und die Stirnseite 31 auf die Greifklaue 30 und
damit auf den Schieber 7 übertragene Kraft steht dabei
vorteilhafterweise senkrecht zur Schieberbetätigungsrichtung, so daß zwar eine Selbsthemmung des Gurtbandes 5,
nicht jedoch eine den Schieber 7 betätigende zusätzliche
Verklemmung der Greifklaue 30 gegenüber der Gurtanlagefläche 15 und damit ein Festzurren der Einrichtung stattfindet. Der Schieber 7 bleibt in seiner Betätigungsrichtung
(A,B) auch bei großen Zugkräften des Tieres am Gurtband 5
leicht verschieblich. Weiterhin kann das Gurtband 5 nach
wie vor von der Spiralfedertrommel 25 beim Wegfall der
Zugkraft durch den Hund automatisch aufgewickelt werden.
Eine Betätigung des Schiebers 7 ist dabei nicht notwendig.
In einer weiteren nicht dargestellten Ausführungsformen
der Erfindung können weitere Absätze in verschiedenen
Auszugslängen am Gurtband 5 mit verschiedenen Höhen der
Stirnflächen 31 angeordnet sein, so daß je nach Stellung
der Greifklaue 30 unterschiedliche voreingestellte Auszugslängen für das Gurtband 5 möglich sind und die Führung
des Hundes den jeweiligen Umgebungsbedingungen variabel
angepaßt werden kann.

+41569

Soll das Gurtband über den in Fig. 5 dargestellten Auszugszustand hinaus weiter ablaufen, dann muß der Kanaldurchgang erweitert werden. Dies geschieht dadurch, daß der
Schieber 7 in Pfeilrichtung B aus der Stellung in Fig. 5
oder über diese Stellung hinaus in die bereits oben beschriebene Stellung von Fig. 4 zurückgeschoben wird.
Der Gurtkanal ist dann soweit erweitert, daß der Absatz
33 mit seiner Stirnseite 31 ohne Halt hindurchlaufen
kann.

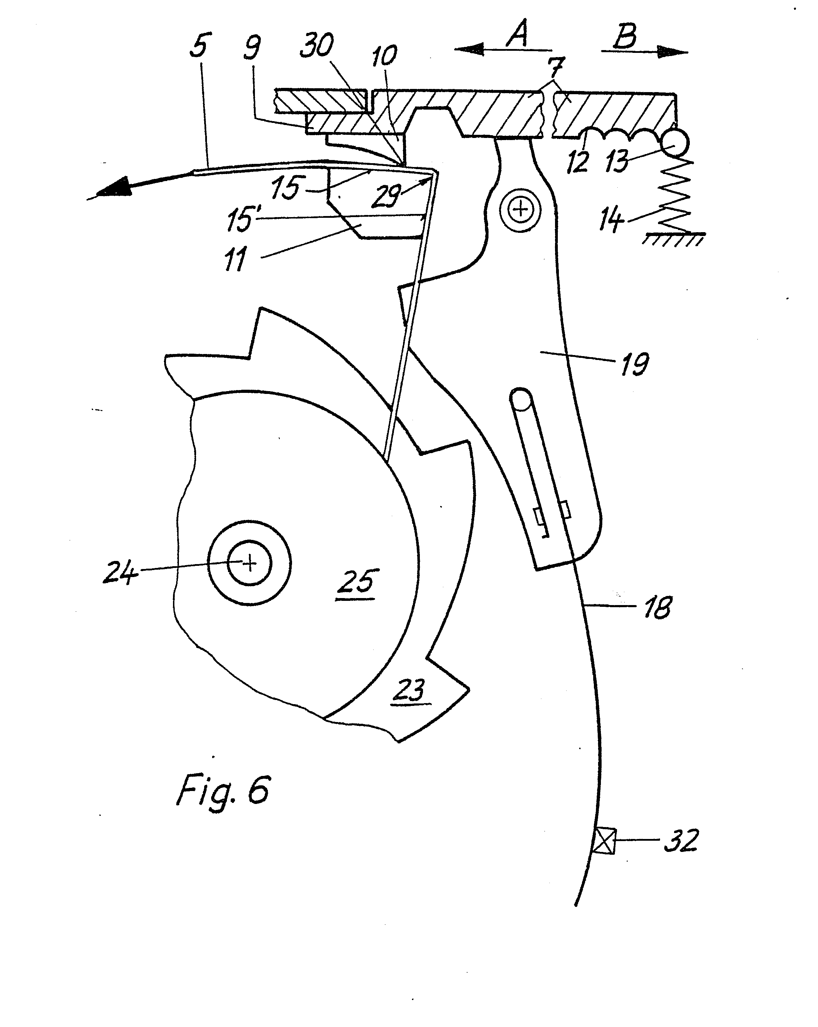

Bei Weiterbewegung des Schiebers 7 in Pfeilrichtung A
aus der in Fig. 5 dargestellten Einstellung bis zum Einrasten der Rastkugel 13 in die letzte Rastöffnung 12
(Fig. 6) wird der Gurtkanal so eingeengt, daß das Gurtband 5 in Aufwickelrichtung eingeklemmt wird, was einen
Bandstopp in beiden Richtungen zur Folge hat (Stufe III).
Die Sperrklinke 19 bleibt dabei weiterhin entgegen der
Kraft ihrer Sperrfeder 18 in ausgehobener Stellung. Die
Aufrollbremskraft wird in dieser Raststufe jedoch nicht
allein vom Zusatzelement in Form der Greifklaue 30 am
Schieber 7 abgeleitet, sondern auch vom Umlenkelement 11,
welches mit seinen nahezu rechtwinklig zueinander angeordneten Gurtanlageflächen 15,15ʹ und der Umlenkkante 29
bei dieser Raststufe dazu beiträgt, daß die auf den Schieber 7 über die Greifklaue 30 und den Kanalsteg 10 einwirkenden Klemmkräfte so begrenzt werden, daß ein leichtes
Lösen des Klemmzustandes und damit eine relativ leichte
Betätiggung des Schiebers 7 erhalten bleibt. Dies wird
u. a. dadurch möglich, daß das Gurtband 5 an der Umlenkkante 29 in Richtung der Spiralfedertrommel 25 entlang der
Gurtanlagefläche 15ʹ abgeknickt ist und somit ein übermäßiges Festzurren des Gurtbandes 5o zwischen dem Betätigungsschieber 7 und dem Umlenkelement 11 weitgehend verhindert
wird. Dadurch bleibt auch in dieser Stellung der Betätigungsschieber 7 auch bei voller Zugkraft des Hundes am Gurtband 5
relativ leicht in Richtung B verschiebbar. Hierzu trägt

+41569

auch nicht unerheblich die Neigung der ersten Gurtanlagefläche 15 mit einem Winkel    zwischen 5 und 30o gegenüber
der Zugrichtung des Gurtbandes bei. Durch diese Neigung der
Gurtanlagefläche 15 treten auf der gesamten Länge dieser
Fläche Reibungskräfte auf, die plötzliche Zugkraftschwankungen
mit abfangen.

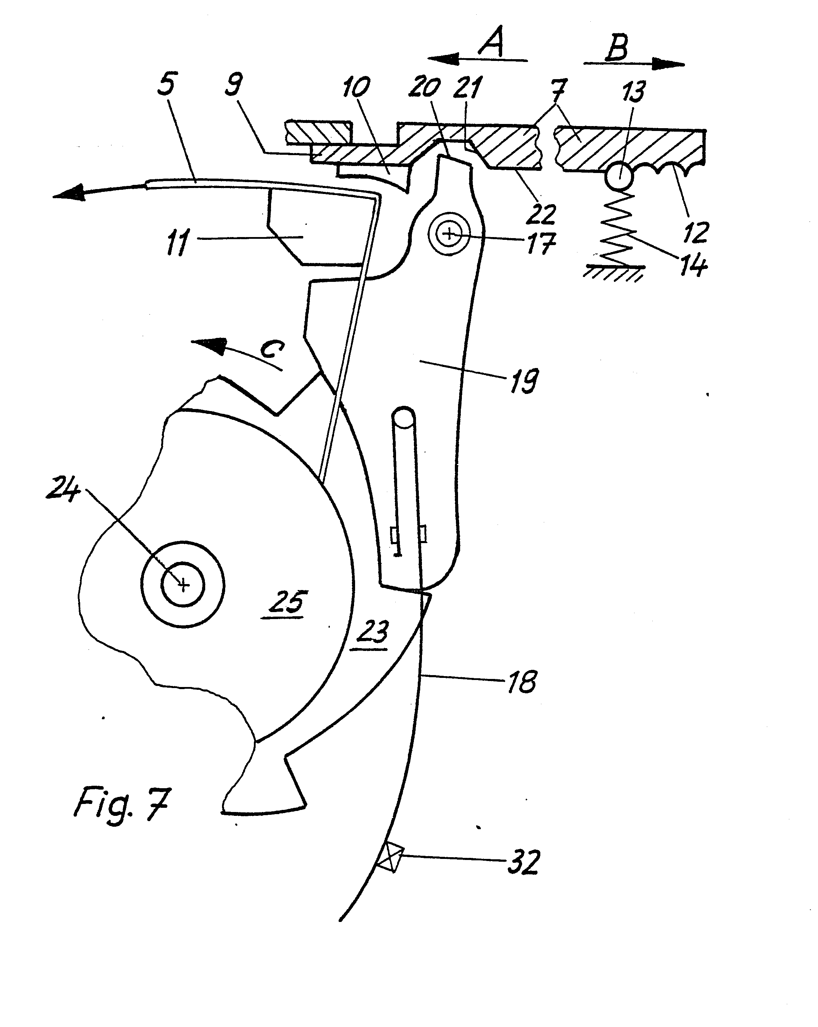

Wird der Schieber 7 nunmehr nach rechts (in Pfeilrichtung
B) bewegt, dann wird die Sperrklinke 19 von der Führungsfläche 22 freigegeben (Fig. 7), so daß sie unter der Wirkung
der Sperrfeder 18 in das Klinkenrad 23 einschwenkt und dessen
Drehung in Ablaufrichtung (Pfeilrichtung C) des Gurtbandes 5
verhindert, während die Drehung des Klinkenrades 23 sich im
Uhrzeigersinne, entgegen Pfeilrichtung C, unbeeinträchtigt
bleibt. In dieser Stellung (Stufe IV) kann also das Gurtband 5
nicht aus dem Mundstück 26 (Fig. 3) herausgezogen werden, während die selbsttätige Rückspulung beim Zurückführen des Gurtbandzuges vermöge der gespannten Spiralfedertrommel 25 nicht
behindert wird. Der Gurtbandkanal bleibt bei dieser Stellung
für den Gurtbanddruchlauf vollkommen frei, so daß der Bandrücklauf nicht beeinträchtigt wird. Auch in dieser Stellung
werden die wesentlichsten Zugkräfte des Hundes über das
Gurtband 5 zunächst vom Umlenkelement 11 über die beiden
Gurtanlageflächen 15,15´ und die Umlenkkante 29 abgefangen,
um dann von Zusatzhalteelementen (Spiralfedertrommel 25,
Klinkenrad 23 und Sperrklinke 19) vollends aufgezehrt zu
werden.

Durch diese in Fig. 7 dargestellte Anordnung des Gurtbandes 5
können die Zusatzhaltelemente 25, 23 und 19 relativ klein
ausgelegt werden, so daß das Gesamtgewicht und Gesamtvolumen
des Traggehäuses sich nicht wesentlich vergrößert.

Wird der Schieber 7 wieder nach links (Pfeilrichtung A)
gezogen, dann rutscht die Klinkenanlagefläche 20 an der
Aufgleitfläche 21 des Schiebers 7 entlang und schwenkt

+41569

die Sperrklinke 19 aus dem Klinkenrad 23 heraus in die Stellung nach Fig. 4, 5 oder 6. In der in Fig. 7 dargestellten Position greift die Sperrklinke 19 in das Klinkenrad 23 ein und bewirkt, daß das Gurtband 5 nicht mehr ausgezogen werden kann, wohl aber durch die Kraft der nicht dargestellten Spiralfeder eingezogen wird. Diese Programmstellung ist besonders wichtig, wenn es darum geht, den Hund vor allem im Gefahrenfalle schnell an den Hundeführer heranzuziehen. Das bisher bekannte mühselige wechselweise Betätigen der Stopptaste, damit das Tier herangezogen werden kann, und das wiederholte Lösen dieser Stopptaste, damit das Gurtband eingerollt werden kann, kann damit entfallen. Der Hundeführer braucht im vorliegenden Falle den Schiebeschalter 7 nur in die Position von Stufe IV bringen und dann seinen natürlichen Reflexbewegungen folgend das Tier einfach an sich heranziehen.

Der hohle Gehäusehandgriff 4 (Fig. 3) kann zur Unterbringung eines Handschlaufenbandes 27 ausgenutzt werden. Das geräteseitige Ende dieses Handschlaufenbandes 27 ist durch einen Knebel 28 so weit verstärkt, daß es nicht aus der Schlaufenöffnung 16 vollständig herausgezogen werden kann. Das Handschlaufenband 27 braucht lediglich in die Schlaufenöffnung 16 eingelegt zu werden, ehe die Gehäuseschale 1 mit dem Gehäusedeckel 2 verschraubt wird. Die Schlaufenöffnung 16 kann soweit ausgelegt werden, daß das Tragband und die Schlaufe größtenteils oder vollständig in den Hohlraum des Gehäusehandgriffs 4 eingeschoben werden können, wenn sie nicht benötigt werden. Wenn die Handschlaufe zusätzlich zum Handgriff vom Hundeführer benutzt wird, bewirkt sie eine Erhöhung der Sicherheit gegen ein Ausderhandgleiten der Leine durch ruckartiges Ziehen des Tieres.

+41569

Patentassessor Dipl.-Ing.
Hellmut Pretzell im Hause
Pelikan Aktiengesellschaft
Hannover

0093445

31.3.1983
82/23

## Patentansprüche

1. Traggehäuse für Tiergurtleinen, insbesondere Hundegurtleinen, mit angeformtem Handgriff, einer mit
einem gezahnten Klinkenrad verbundenen Spiralfedertrommelspule für den Gurtwickel, von welcher das
Gurtband beim Ausziehen und Spannen der Spiralfeder
abwickelbar, in beliebiger Auszugslänge mittels eines
Handstellers feststellbar und bei seiner Freigabe
durch die Spiralfeder wieder selbsttätig aufwickelbar
ist, dadurch gekennzeichent, daß im Traggehäuse ein
Umlenkelement (11) mit nahezu rechtwinklig zueinander
angeordneten Gurtanlageflächen (15,15˝) befestigt ist,
welches über das Gurtband (5) mit mindestens einem
Zusatzhalteelement (7, 9, 10, 30, 31, 33; 19, 20,
21, 22, 23, 25) in Wirkverbindung bringbar ist.

2. Traggehäuse nach Anspruch 1, dadurch gekennzeichnet, daß die Gurtanlageflächen (15,15˝) derart angeordnet sind, daß ihr Winkel ($\alpha + \beta$) zur Zugrichtung
des Gurtbandes (5) zwischen 70o und 120o beträgt,
daß der Winkel ($\alpha$) der ersten Gurtanlagefläche (15)
minimal 5o und maximal 30o beträgt, wobei an der

+40656

- 2 -

Schnittlinie beider Gurtanlageflächen (15,15') das Umlenkelement (11) eine scharfe Umlenkkante (29) aufweist.

3. Traggehäuse nach Anspruch 1 und 2, dadurch gekennzeichnet, daß der Handsteller als Schieber (7) mit Betätigungsgriff (6) im Fingergriffbereich des Gehäusehandgriffs (4) ausgebildet ist, wobei durch dessen vorderes Ende (9,10) mit dem darunter angeordneten Umlenkelement (11) ein durch Bewegen des Schiebers (7) und damit der Zusatzelemente Greifklaue (30) und Kanalsteg (10) in der Stärke veränderbarer Gurtkanal ausbildbar ist.

4. Traggehäuse nach Anspruch 1 bis 3, dadurch gekennzeichnet, daß das Zusatzhalteelement in Form der Greifklaue (30) am Kanalsteg (10) mittels des Schiebers (7) auf eine Stirnseite (31) eines Absatzes (33) am Gurtband (5) positionierbar ist.

5. Traggehäuse nach Anpsruch 1 bis 3, dadurch gekennzeichnet, daß das Gurtband (5) in an sich bekannter Weise zwischen die erste Gurtanlagefläche (15) und das Zusatzhalteelement in Form der Greifklaue (30) die am Kanalsteg (10) angeordnet ist, klemmbar ist.

6. Traggehäuse nach Anspruch 1 bis 3, dadurch gekennzeichnet, daß durch mehrere Zusatzelemente in Form einer um einen Drehpunkt (17) schwenkbaren Sperrklinke (19), die zwischen dem Schieber (7) und einem Klinkenrad (23) angeordnet ist, und die gegen die Spannung ihrer Sperrfeder (18) mittels Führungsflächen (21,22) am Schieber (7) und mittels einer Klinkenanlagefläche (20) an der Sperrklinke (19) aushebbar ist, sowie in Form des Klinken-

+40656

rades (23) und in Form einer Spiralfedertrommel (25) das Gurtband (5) automatisch nur in der Auslaufrichtung festhaltbar ist.

7. Traggehäuse, nach einem oder mehreren der vorhergehenden Ansprüche, dadurch gekennzeichnet, daß Einstellstufen des Schiebers (7) Rasten (12) zugeordnet sind, und daß die Zuordnung der Führungsflächen (21, 22) des Schiebers, der Sperrklinke (19) und ihrer Klinkenanlagefläche (20) sowie der Gurtkanalhöhen zwischen der Greifklaue (30) und der Umlenkkante (29) zu den einzelnen Stufen in der Weise bestimmt ist, daß bei

Stufe I die Kanalhöhe die Gurtstärke wesentlich übersteigt (Vollfreilauf) und

Stufe II die Kanalhöhe derart vermindert ist, daß durch den Absatz (33) auf dem Gurt (5) dieser arretierbar ist (Vorlaufsperre auf halber Gurtlänge/Rücklauf frei) und

Stufe III die Vollsperre durch den verengten Gurtkanal und die scharfe Umlenkkante (29) in beiden Richtungen einstellbar ist, und

Stufe IV des Umlenkelements (11) mit den Gurtanlageflächen (15,15˝) und die Sperrklinke (19) wirksam ist und die Kanalhöhe die Gurtstärke wesentlich übersteigt (Vorlaufsperre/Rücklauf frei).

8. Traggehäuse nach mindestens einem der Ansprüche 1 bis 7, gekennzeichnet durch ein Fenster (8) im Schieber (7) für eine auf der darunterliegenden Gehäuseoberfläche angeordnete Ziffer oder Farbmarkierung.

+40656

9. Traggehäuse nach einem oder mehreren der Ansprüche 1 bis 8, gekennzeichnet durch ein durch die Öffnung (16) des hohlen Gehäusehandgriffs (4) geführtes und in diesem einschieb bares und am inneren Ende durch einen Verstärkungs knebel (38) gesichertes Tragband (37).

10. Traggehäuse nach Anspruch 9, dadurch gekennzeichnet, daß die Öffnung (16) des Hohlgriffs (4) in zwei Hälften unterteilt ist, zur Aufnahme eines endlosen Handschlaufenbandes (27).

+40656

0093445

Fig.1

5   2   3   6   4

27

Fig.1

1

26   2   9   7   8   6

2m

Fig.2

Fig.3

0093445

Fig. 4

Fig. 5

Fig. 6

616

A

B

5  9  10  20  21  7  13

11

22

17

12

14

C

19

24

25

23

18

Fig. 7

32

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 852 907 (M. BOGDAHN) * Seite 7, Zeile 11 - Seite 9; Figuren 1-3 * | 1 | A 01 K 27/00 |
| | --- | | |
| A | GB-A-2 059 239 (M.D. McCARTHY) * Seite 1, Zeilen 98-116; Figuren 1-3 * | 1 | |
| | --- | | |
| D,A | DE-U-7 235 308 (P. BURTSCHER) * Anspruch 1; Figuren 1-3 * | 1 | |
| | --- | | |
| D,P A | DE-A-3 040 281 (M. BOGDAHN) * Anspruch 1; Figuren 1, 2 * | 1,3 | |
| | ----- | | |

**RECHERCHIERTE SACHGEBIETE (Int. Cl. ³)**

A 01 K 27/00

Der vorliegende Recherchenbericht wurde für alle Patentansprüche erstellt.

| Recherchenort BERLIN | Abschlußdatum der Recherche 05-07-1983 | Prüfer SCHOFER G |
|---|---|---|